# EUROPEAN PATENT APPLICATION

(11) **EP 3 925 847 A1**
(43) Date of publication of application: **22.12.2021**
(21) Application number: 20755329.8
(22) Date of filing: 06.02.2020
(51) Int. Cl.: B61C 17/12, B60L 9/18

(54) **DRIVING DEVICE FOR RAILWAY VEHICLES, RAILWAY VEHICLE, AND METHOD FOR MANUFACTURING RAILWAY VEHICLE**

(30) Priority: 13.02.2019 JP 2019023303
(71) Applicant: Hitachi, Ltd., Tokyo 100-8280 (JP)
(72) Inventor: AKIYAMA, Satoru, Tokyo 100-8280 (JP); SAIRENJI, Kazuhiro, Ibaraki 312-8506 (JP); TSUKAMOTO, Ken, Tokyo 100-8280 (JP); KOGURE, Hiroshi, Tokyo 100-8280 (JP); NARUKI, Wataru, Tokyo 100-8280 (JP)
(74) Representative: Mewburn Ellis LLP
(86) International application number: PCT/JP2020/004493
(87) International publication number: WO 2020/166472

(57) **Abstract**

The purpose of the present invention is to provide a driving device for railway vehicles, which can suppress outfit cost, a railway vehicle, and a method for manufacturing the railway vehicle. This driving device for a railway vehicle in which a high-voltage line HVL and a low-voltage line LVL extend in parallel along a longitudinal direction has: an automatic breaker SHB; a line breaker LB; a power unit PU; a filter reactor FL; a logical unit LU; and a casing BX. The casing BX is attachable to and detachable from a vehicle body BD 1 of the railway vehicle in a state of housing therein the automatic breaker SHB, the line breaker LB, the power unit PU, the filter reactor FL, and the logical unit LU. A high-voltage line connection connector PN connectable to a high-voltage branch line HBL branching from the high-voltage line HVL and a low-voltage line connection connector LU1 connectable to a low-voltage branch line LBL branching from the low-voltage line LVL are respectively arranged on the high-voltage line HVL side and the low-voltage line LVL side of the casing BX.

## Description

### TECHNICAL FIELD

The present invention generally relates to a driving device for railway vehicles, a railway vehicle and a method for manufacturing a railway vehicle.

### BACKGROUND ART

Existing railway vehicles to use a DC overhead line are each mounted with devices such as a circuit breaker, a line breaker, a filter reactor, and an inverter unit, and such devices make up a driving device. In a typical example, such devices are respectively installed in individual housings and are outfitted under the floor of a railway vehicle. For example, driving devices disclosed in Patent Literature 1 and 2 are known.

### CITATION LIST

### Patent Literature

Patent literature 1: Japanese Unexamined Patent Application Publication No. 2017-204914
Patent literature 2: Japanese Unexamined Patent Application Publication No. 2017-184412

### SUMMARY OF INVENTION

### Technical Problem

In cases where devices making up a driving device of an existing type are outfitted under a vehicle floor, the freedom of underfloor outfitting may be said to be high from the viewpoint that devices can be individually attached to and removed from a railway vehicle. On the other hand, since ordinary underfloor outfitting is carried out in a pit, for example, in a vehicle maintenance factory, there is still much room for improvement regarding underfloor outfitting from the viewpoint that outfitters are forced to work in a pit providing relatively small space. Also, regarding wiring layout and electric connections between individual devices, there is a problem that, as the number of devices increases, outfitting man-hours also increase.

Hence, the present invention has been made from a point of view different from conventional ones and aims at providing a driving device for railway vehicles, a railway vehicle and a method for manufacturing a railway vehicle which improve work efficiency and reduce outfitting man-hours.

### Solution to Problem

To solve the above problem, a typical driving device for railway vehicles according to the present invention is for railway vehicles each provided with a high-voltage line and a low-voltage line extending in parallel along a front-rear direction, the driving device including an automatic circuit breaker, a line breaker, a power converter, a filter reactor, a logic unit, and a housing. The housing in a state of housing the automatic circuit breaker, the line breaker, the power converter, the filter reactor, and the logic unit can be attached to and removed from a body of the railway vehicle. A connector for connecting a high-voltage line, the connector being connectable to a high-voltage branch line branched from the high-voltage line, and a connector for connecting a low-voltage line, the connector being connectable to a low-voltage branch line branched from the low-voltage line, are provided on the high-voltage line side and on the low-voltage line side, respectively, in the housing.

Furthermore, a typical method for manufacturing a railway vehicle according to the present invention includes: attaching a housing to a body of a railway vehicle, the housing housing an automatic circuit breaker, a line breaker, a power converter, a filter reactor, and a logic unit; and connecting a high-voltage line and a low-voltage line extending in parallel along a front-rear direction of the vehicle body, respectively via a high-voltage branch line and a low-voltage branch line not intersecting in a height direction of the vehicle body, to a connector for connecting a high-voltage line and to a connector for connecting a low-voltage line, respectively, the connector for connecting a high-voltage line and the connector for connecting a low-voltage line being provided on the high-voltage line side and on the low-voltage line side, respectively, in the housing.

### Advantageous Effects of Invention

According to the present invention, driving device outfitting work is basically completed just by attaching a housing to a vehicle body and connecting a high-voltage branch line and a low-voltage branch line to corresponding connectors. Also, since the branch lines branched from a high-voltage line and a low-voltage line which are arranged to be spaced from each other are to be connected to the corresponding connectors provided on the high-voltage line side and on the low-voltage line side, respectively, in the housing, the branch lines can be connected to the corresponding connectors without being bent more than required. This makes wiring outfitting to a vehicle body easy and, moreover, since the connected branch lines do not mutually intersect, effects of the high-voltage line on the low-voltage line can be suppressed.

Other objects, configurations and effects than the above-described will become apparent from the following description of embodiments.

### BRIEF DESCRIPTION OF DRAWINGS

Fig. 1 is a circuit configuration diagram of a driving device for railway vehicles according to a first embodiment.
Fig. 2 is a diagram showing an underside view of an example of arrangement in which typical devices included in a main circuit converter VVVF1G1 that is the driving device for railway vehicles shown in Fig. 1 are housed in a same rectangular housing BX.
Fig. 3 is a diagram showing an example of underfloor arrangement of devices installed in railway vehicles.
Fig. 4 is a cross-sectional view taken along line A-A in Fig. 3.
Fig. 5 is a diagram showing an underside view of an example of arrangement in which typical devices included in a main circuit converter VVVF2G1 according to a second embodiment are installed in a same rectangular housing BX.
Fig. 6 is a diagram showing an example of underfloor arrangement of devices, including the main circuit converter VVVF2G1, installed in railway vehicles.

### DESCRIPTION OF EMBODIMENTS

In the following description of embodiments, the description will be divided for two or more sections or two or more embodiments as required for the sake of convenience. However, unless otherwise expressed, such sections and embodiments are not mutually irrelevant and, among them, one is an example of partial or total modification of another, or one elaborates or supplements another. Also, numbers of elements referred to in the following description of embodiments (which may be numbers representing counts, numeric values, amounts or ranges) are not limited to specific numbers, except when explicitly limited to specific numbers or when obviously limited in principle to specific numbers, and they may be smaller or larger than the numbers referred to.

Furthermore, it goes without saying that, in the following description of embodiments, the constituent elements (including elemental steps) are not necessarily essential unless otherwise expressed or except when they are considered obviously essential in principle. Similarly, in the following description of embodiments, the shapes of and positional relationships between constituent elements referred to are inclusive of those substantially close to or similar to them unless otherwise expressed or except when they are obviously considered otherwise in principle. This also applies to the numeric values and ranges mentioned above.

### [First Embodiment]

In the following, embodiments of the present invention will be described with reference to drawings. The directions referred to in the following description are defined as follows. In the drawings, the longitudinal direction (front-back direction, traveling direction, rail direction) is the X direction, the width direction (sleeper direction, left-right direction) is the Y direction, and the height direction is the Z direction.

Also, the term "high-voltage line" refers to a cable or wiring for supplying high-voltage (for example, 1500 V or 750 V) power supplied from an overhead line (overhead contact line) or a third rail, and the term "low-voltage line" refers to a cable or wiring for supplying lower voltage power (for example, of 100 V to 200 V, hereinafter referred to as "100 V") than the power of the high-voltage line and/or a communication cable or wiring. The low-voltage lines are, in many cases, used in bundles.

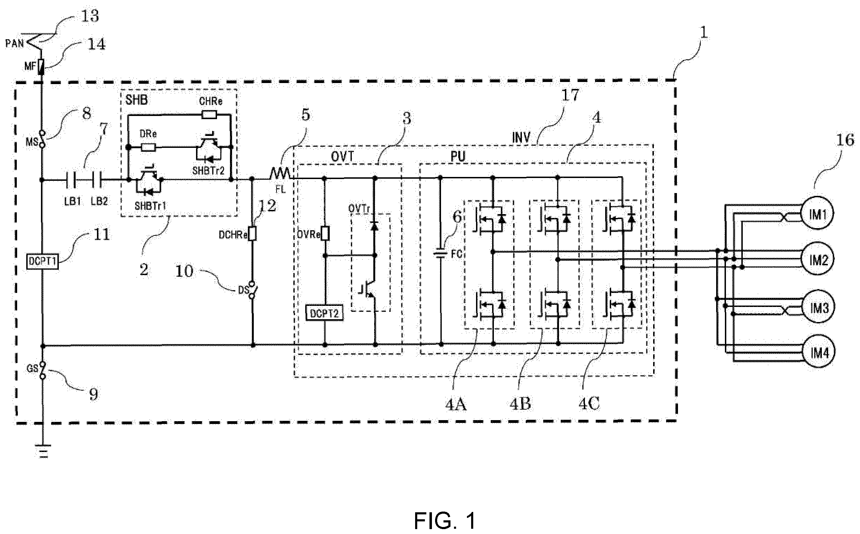

Fig. 1 is a circuit configuration diagram of a driving device for railway vehicles according to a first embodiment. The driving device for railway vehicles is provided with a semiconductor current limiter (SHB) 2 for, for example, when an accidental current occurs on the inverter power unit PU side, reducing the accidental current and breaks the reduced-current line using line breakers (LB1, LB2) 7 or, in the case of an inverter failure, opens a main circuit. The semiconductor current limiter (SHB) 2 includes a current limiting element SHBTr1, a current limiting resistor DRe, a filter capacitor (FC) charging element SHBTr2, and a charging resistor CHRe.

Furthermore, the driving device for railway vehicles in which the line breakers (LB1, LB2) 7, the semiconductor current limiter (SHB) 2, and a filter reactor (FL) 5 are series-connected employs a so-called 1C4M control system to drive four motors (IM1 to IM4) 16 by using an inverter device (INV) 17 having a built-in filter capacitor (FC) 6.

For a path to supply power from an overhead contact line, a main switch (MS) 8 for electrically disconnecting the contact line voltage inputted from an overhead contact line of 1,500 VDC via a pantograph 13 and a main fuse (MF) 14 from the main circuit and a ground switch (GS) 9 for electrically disconnecting the ground side from the main circuit are provided. Also, an overvoltage prevention circuit (OVT) 3 including an overvoltage discharge element (OVTr), a discharge resistor (OVRe), and a voltmeter (DCPT2) is provided, and, furthermore, a voltmeter (DCPT1) 11, a discharge resistor (DCHRe) 12, a discharge switch (DS) 10, and a power unit (PU) 4 which is a power converter including inverters 4A, 4B, and 4C are provided. Note that, in Fig. 1, connectors for connecting input/output wirings from individual devices are not shown.

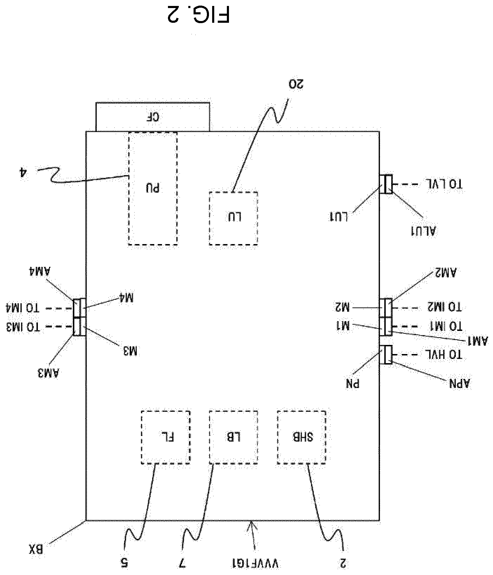

Fig. 2 is a diagram showing an underside view of an example of arrangement in which typical devices included in a main circuit converter VVVF1G1 configuring the driving device for railway vehicles shown in Fig. 1 are housed in a same rectangular housing BX. Note that, in Fig. 2, wirings inside the housing BX are not shown and that each device is schematically shown as a broken-line rectangular frame.

The typical devices included in the main circuit converter VVVF1G1 include the semiconductor current limiter (SHB) 2, a line breaker (LB) 7, the filter reactor (FL) 5, a logic unit (LU) 20, and the power unit (PU) 4. The semiconductor current limiter (SHB) 2 is used for a role of detecting an overcurrent occurring in the main circuit converter VVVF1G1 and electrically disconnecting the overhead contact line side from the main circuit converter VVVF1G1 to, thereby, prevent a substation breaker from tripping. The line breaker (LB) 7 cuts off the main current flowing through the main circuit converter VVVF1G1. The filter reactor (FL) 5 has a role of suppressing AC noise current from the overhead contact line side or suppressing rising of the overcurrent (suppressing voltage pulsation). The power unit (PU) 4 converts DC power into three-phase AC power and supplies the converted power to traction motors IM1 to IM4. The logic unit (LU) 20 is a device to perform control to cause desired voltages to be outputted from the power unit (PU) 4 and an auxiliary power supply SIV1. A cooling fin CF suppresses rising of temperatures of semiconductor elements used in the power unit (PU) 4. Also, the main circuit converter VVVF1G1 of the present embodiment has, as interfaces between the vehicle body side and wiring connections, a connector PN for connecting a high-voltage line, connectors M1, M2, M3 and M4 for connecting the traction motors IM1 to IM4, and a connector LU1 for connecting a low-voltage line used, for example, for connection with a control signal line of the logic unit (LU) 20 or a 100-V wiring.

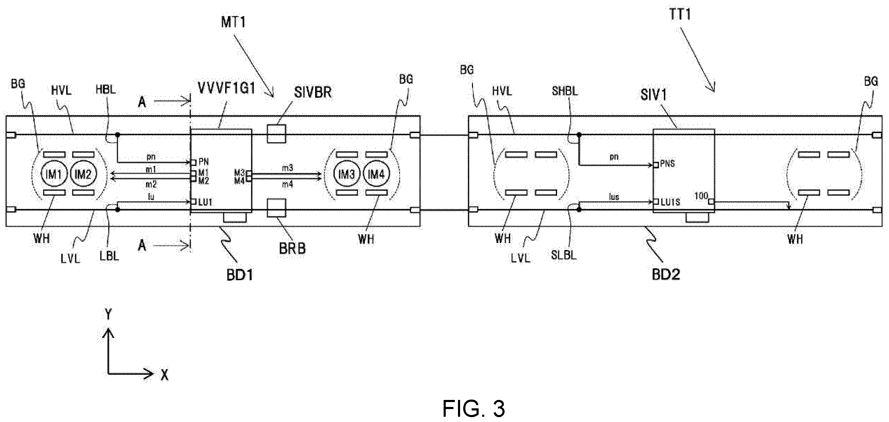

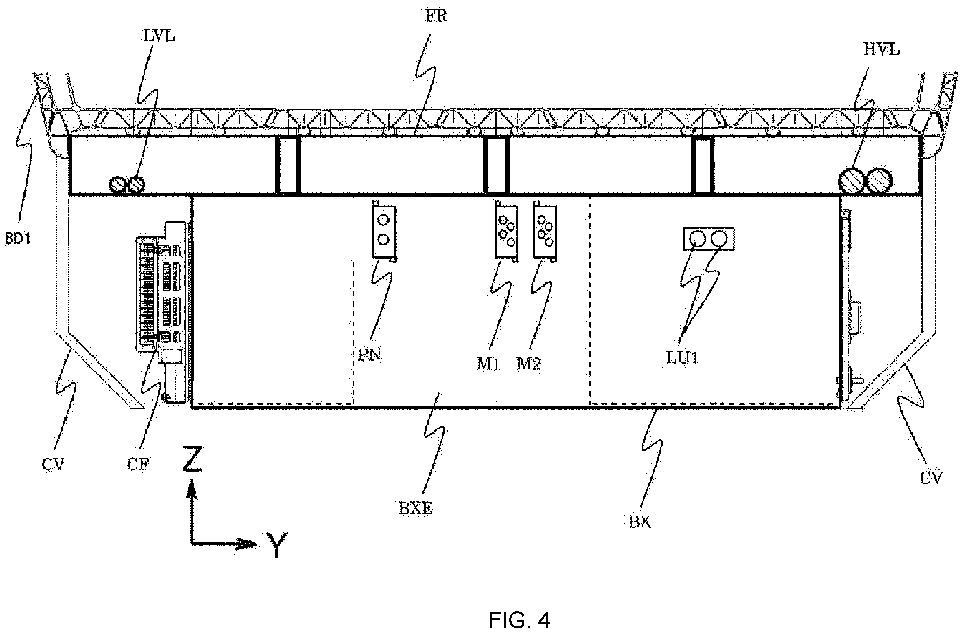

The connector PN for connecting a high-voltage line is, as shown in Fig. 4 being described later, externally exposed from the housing BX to be connectable with a connector APN of a high-voltage branch line HBL (Fig. 3). Similarly, the connector LU1 for connecting a low-voltage line is also externally exposed from the housing BX to be connectable with a connector ALU1 of a low-voltage branch line LBL (Fig. 3). Furthermore, the connectors M1, M2, M3 and M4 for connecting the traction motors are also externally exposed from the housing BX to be connectable with wiring connectors AM1, AM2, AM3 and AM4 on the motor side. The connectors may be publicly known connectors.

The devices to be housed in the housing BX preferably include at least the semiconductor current limiter (SHB) 2 as an automatic circuit breaker, the line breaker (LB) 7, the power unit (PU) 4, the filter reactor (FL) 5, and the logic unit (LU) 20. This is because, with these devices being relatively large, it is preferable from the viewpoint of work efficiency to house the devices as a unit in the housing BX, making the devices installable/removable together. Other devices may also be housed in the housing BX. Also, with the power unit (PU) 4 and the filter reactor (FL) 5 housed in the housing BX, the wirings from the power unit (PU) 4 to the connectors M1, M2, M3, and M4 for connecting the traction motors are completed in the housing BX, so that wiring work efficiency is improved. Note that, instead of the semiconductor current limiter (SHB) 2, a publicly known high-speed circuit breaker (HB) may be used as an automatic circuit breaker.

A cooler (a cooling fin in the present case) CF is provided to be projecting outward from the interior of the housing BX on the outer surface side of the power unit (PU) 4. Additionally, a similar cooler may also be provided on the outer surface side of the semiconductor current limiter (SHB) 2 that easily generates heat.

Fig. 3 is a diagram showing an example of underfloor arrangement of devices installed in railway vehicles. In the example shown in Fig. 3, a motor-mounted vehicle MT1 and a motorless vehicle TT1 are shown connected to each other. The motor-mounted vehicle MT1 has a vehicle body BD1, the housing BX (Fig. 4) housing the devices included in the main circuit converter VVVF1G1, and two bogies BG provided with wheels WH and traction motors IM1, IM2, IM3 and IM4. The front and rear bogies each holding wheels WH are each mounted with two of the traction motors IM1, IM2, IM3, and IM4 to drive the wheels WH.

The devices included in the main circuit converter VVVF1G1 are housed in the housing BX and are attached, via the housing BX, to a central part of the vehicle body BD1 of the motor-mounted vehicle MT1. The traction motors IM1, IM2, IM3, and IM4 mounted on the bogies BG rotationally drive the wheels WH based on three-phase AC voltage signals outputted under the control of the main circuit converter VVVF1G1 and can cause the vehicles to travel at a desired speed. In the case of the motorless vehicle TT1, an auxiliary power supply SIV1 is provided in a central part of a vehicle body BD2.

Furthermore, in addition to a disconnection switch box BRB and an SIV line breaker box SIVBR provided, as shown in Fig. 3, under the floor of the vehicle body BD1 of the motor-mounted vehicle MT1, such items as an information control device box (box containing a control transfer/monitoring device for railway vehicles), a bus line breaker box, a brake control device, a supply air reservoir, an anti-skid valve device, and a straight air reserve brake device are also provided, though not shown.

A high voltage line HVL (including a ground wire) of 1500 V pulled from the overhead contact line to under the vehicle floor is, as shown in Fig. 3, arranged under the floor to extend along the front-rear direction (X direction) on one side in the Y direction of the vehicle body BD1.

A low voltage line LVL (including communication wiring) of 100 V extends, in parallel with the high-voltage line HVL, along the front-rear direction (X direction) on the other side in the Y direction of the vehicle body BD1. The high-voltage line HVL and the low-voltage line LVL extend also through the vehicle body BD2 of the adjacent motorless vehicle TT1.

The high-voltage line HVL and the low-voltage line LVL are arranged to be spaced in the sleeper direction (Y direction) of the vehicle bodies BD1 and BD2. This is to allow a high-voltage line coupler and a low-voltage junction box to be near the high-voltage line HVL and the low-voltage line LVL, respectively, in the sleeper direction. In this way, wiring connections can be made without unnecessarily bending wires, as a result, to allow easy outfitting wiring for vehicle bodies. Also, arranging the low-voltage line LVL to be spaced from the high-voltage line HVL to bear a high voltage has an effect to suppress temperature rising of the low-voltage line LVL.

Fig. 4 is a cross-sectional view taken along line A-A in Fig. 3, and devices in the housing BX are shown in broken line. Inside the schematically shown underframe FR of the vehicle body BD1, the high-voltage line HVL and the low-voltage line LVL extend in the direction perpendicular to the drawing surface. On the underside of the underframe FR, the housing BX attached with each device is attached with bolts or the like, not shown. Both sides of the housing BX in the sleeper direction (Y direction) are shielded by covers CV attached to the vehicle body BD1, but the bottom wall covering the whole underside of the housing BX is externally exposed. The bottom wall of the housing BX is provided with an openable/closable door (not shown) such that, for example, a worker in a pit can open the door and access the internal devices.

As shown in Fig. 4, the connectors M1 and M2 for connecting traction motors IM are provided side by side in an approximately middle part of an end face BXE in the front-rear direction of the housing BX. The remaining connectors M3 and M4 for connecting traction motors are provided in a corresponding portion of the opposite end face of the housing BX. The connector PN for connecting a high-voltage line is closer to the high-voltage line HVL than the connectors M1 and M2 for connecting traction motors and is provided near the connectors M1 and M2 for connecting traction motors on the end face BXE in the front-rear direction. The connector LU1 for connecting a low-voltage line is provided, to be closer to the low-voltage line LVL than the connectors M1 and M2 for connecting traction motors, on the end face BXE in the front-rear direction. The connectors are not limited to the illustrated shapes and may have various shapes, for example, round and square shapes, and using different connectors of different shapes can prevent connection errors.

Positioning, as described above, the connector PN for connecting a high-voltage line near a middle part of the end face BXE in the front-rear direction facilitates avoiding interference between wirings in the housing BX and the internal devices. The connector PN for connecting a high-voltage line may also be positioned on the end part side in the Y direction of the end face BXE in the front-rear direction. Doing so makes it possible to reduce the wiring length for the high-voltage branch line HBL for a cost reduction. Also, the connector PN for connecting a high-voltage line and the connector LU1 for connecting a low-voltage line may be positioned respectively on different end faces in the front-rear direction of the housing BX.

Also, positioning the connectors M1, M2, M3, and M4 for connecting traction motors near a middle part of the end face BXE in the front-rear direction allows wirings connected to the traction motors IM1, IM2, IM3, and IM4 to extend along the center of the vehicle body BD1, so that the wiring slacks provided to prepare for turning of the bogies BG with respect to the vehicle body BD1 can be minimized.

Referring to Fig. 3, in a state in which the housing BX housing individual devices is attached to the vehicle body BD1 of the motor-mounted vehicle MT1, connecting the connector APN (Fig. 2) provided at an end of the high-voltage branch line HBL branched from the high-voltage line HVL to the connector PN for connecting a high-voltage line provided in the housing BX causes high-voltage power pn to be supplied from the high-voltage line HVL to devices in the housing BX. The high-voltage power pn is converted, at the power unit (PU) 4, into four kinds of three-phase AC voltage signals of which three-phase AC voltage signals m1 and m2 are transmitted to the traction motors IM1 and IM2 via the connectors M1 and M2 for connecting traction motors and also via respective wirings and also of which three-phase AC voltage signals m3 and m4 are transmitted to the traction motors IM3 and IM4 via the connectors M3 and M4 for connecting traction motors and also via respective wirings, thereby driving the respective traction motors.

Also, in the vehicle body BD1 of the motor-mounted vehicle MT1, connecting the connector ALU1 (Fig. 2) provided at an end of the low-voltage branch line LBL branched from the low-voltage line LVL to the connector LU1 for connecting a low-voltage line provided in the housing BX causes low-voltage power lu, etc. to be supplied from the low-voltage line LVL to devices in the housing BX, and this also causes control signals to be outputted from the logic unit (LU) to the low-voltage line LVL.

On the other hand, in the vehicle body BD2 of the motorless vehicle TT1, connecting the connector (not shown) provided at an end of an auxiliary high-voltage branch line SHBL branched from the high-voltage line HVL to a connector PNS for connecting an auxiliary high-voltage line provided in the auxiliary power supply SIV1 causes high-voltage power pn to be supplied from the high-voltage line HVL to the auxiliary power supply SIV1. A transformer included in the auxiliary power supply SIV1 converts the high-voltage power pn into low-voltage power of 100 V and supplies the converted power from a connector 100 to the low-voltage line LVL. The low-voltage power is supplied, via the low-voltage line LVL, to the main circuit converter VVVF1G1 and the logic unit LU that is a control circuit of the auxiliary power supply SIV1. The logic unit LU outputs a control signal to the power unit (PU) 4 of the main circuit converter VVVF1G1 and also outputs a control signal lus for controlling the transformer, etc. of the auxiliary power supply SIV1 to the low-voltage line LVL.

Also, in the vehicle body BD2 of the motorless vehicle TT1, connecting a connector (not shown) provided at an end of an auxiliary low-voltage branch line SLBL branched from the low-voltage line LVL to a connector LU1S for connecting an auxiliary low-voltage line provided in the power supply SIV1 causes the control signal 1us, etc. to be supplied from the low-voltage line LVL to devices in the auxiliary power supply SIV1.

According to the present embodiment, at least the semiconductor current limiter (SHB) 2, the line breaker (LB) 7, the power unit (PU) 4, the filter reactor (FL) 5, and the logic unit (LU) 20 are housed as a unit in the housing BX, and these devices can be attached to and removed from the underframe FR of the vehicle body BD1 together with the housing BX. Therefore, in a state with the housing BX placed, for example, on a working table outside the vehicle body BD1, the devices can be installed and wired, so that the work can be performed in a comfortable posture, reducing the burden on the operator. This allows outfitting work to be performed efficiently. For maintenance, too, in a state with the housing BX removed from the underframe FR of the vehicle body BD1 and placed, for example, on a working table, the devices can be inspected and replaced with ease.

Furthermore, with the housing BX attached to the underframe FR of the vehicle body BD1, wiring to the high-voltage line HVL, low-voltage line LVL, and traction motors IM1 to IM4 can be made just by connecting connectors without using any tool. This remarkably reduces the man-hours for outfitting.

Furthermore, when a substitute housing BX housing a same main circuit converter VVVF1G1 as the one being used is prepared, it is possible to remove the main circuit converter VVVF1G1 used for a certain period of time from the vehicle body BD1 in the state of being housed in the housing BX and then attach the main circuit converter VVF1G1 housed in the substitute housing BX to the vehicle body BD1. In this way, the same vehicle can be immediately put in operation to achieve high operation efficiency. While the vehicle is in operation, maintenance can be performed on the removed main circuit converter VVVF1G1 so as to make it a substitute next time when the main circuit converter VVVF1G1 in use is to be replaced.

By arranging wires to be connected to the main circuit converter VVVF1G1 together in an underfloor central part, wire routing (e.g. number of bends) can be minimized. Positioning the connector PN for connecting a high-voltage line and the connectors M1, M2, M3, and M4 for connecting traction motors that are subjected to relatively high voltage altogether in a central part of the housing BX while positioning the connector LU1 for connecting a low-voltage line and relevant wiring on an end portion side in the housing BX makes it possible to shorten the distance to be moved during wiring connection work and prevent connection errors to eventually reduce the man-hours for outfitting.

Furthermore, as shown in Fig. 3, the high-voltage line connector PN is provided on the side closer to the high-voltage line HVL and the connector LU1 for connecting a low-voltage line is provided on the sider closer to the low-voltage line LVL, so that the high-voltage branch line HBL branched from the high-voltage line HVL and the low-voltage branch line LBL branched from the low-voltage line LVL do not mutually cross when viewed in the height direction (Fig. 3) of the vehicle body BD1. This suppresses the effect of heat generation by the high-voltage line HVL on the low-voltage line LVL.

### [Second Embodiment]

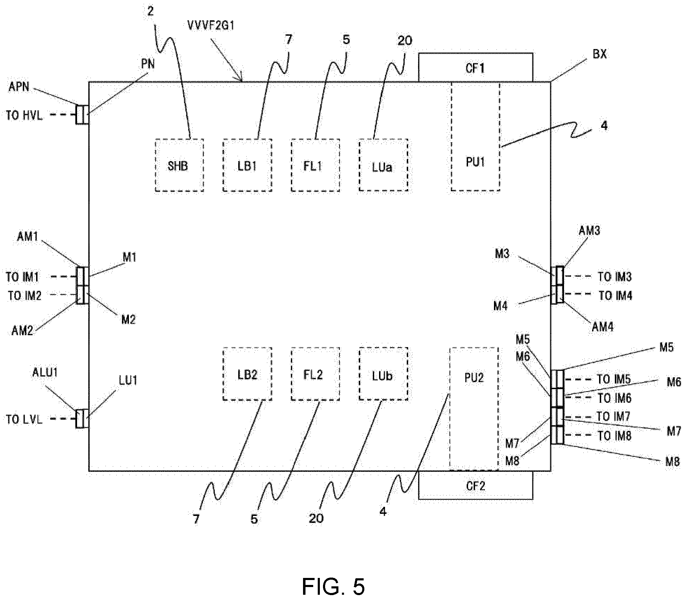

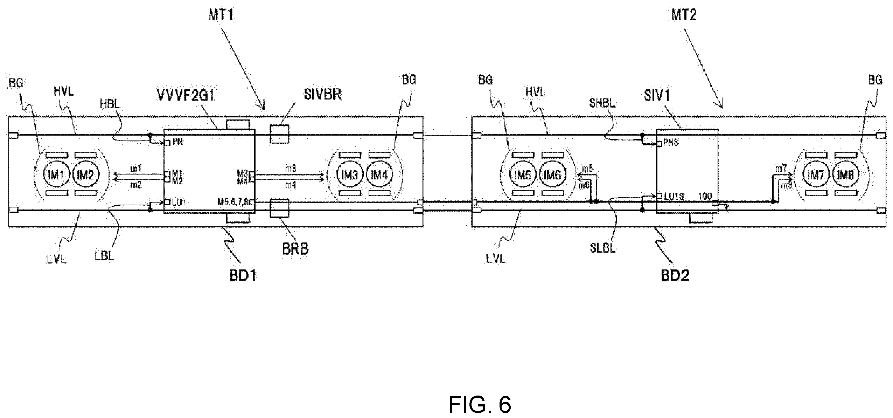

Fig. 5 is a diagram showing an underside view of an example of arrangement in which typical devices included in a main circuit converter VVVF2G1 according to a second embodiment are installed in a same rectangular housing BX. Fig. 6 is a diagram showing an example of underfloor arrangement of devices, including the main circuit converter VVVF2G1, installed in railway vehicles.

The main circuit converter VVVF2G1 according to the present embodiment can drive eight traction motors and includes a semiconductor current limiter (SHB) 2, two line breakers (LB1, LB2) 7, two power units (PU1, PU2) 4 respectively connected to coolers CF, two filter reactors (FL1, FL2) 5, and two logic units (LUa, LUb) 20 all of which are housed in a single housing BX. Namely, the main circuit converter VVVF2G1 is analogous to a configuration including two main circuit converters VVVF1G1, each for driving four traction motors, but the semiconductor current limiter (SHB) 2 is for shared use.

Also, in addition to the connectors according to the first embodiment, connectors M5, M6, M7, and M8 for connecting traction motors are provided on an end face of the housing BX where connectors M3 and M4 for connecting traction motors are provided. Note that, though the two logic units (LUa and LUb) are provided, the single connector LU1 for connecting a low-voltage line is provided for shared use. However, two or more connectors for connecting low-voltage lines may be provided.

Referring to Fig. 6, a motor-mounted vehicle MT1 mounted with the main circuit converter VVVF2G1 and a motor-mounted vehicle MT2 mounted with an auxiliary power supply SIV1 are coupled. The vehicle body BD2 of the motor-mounted vehicle MT2 has a bogie BG provided with traction motors IM5 and IM6 and a bogie BG provided with traction motors IM7 and IM8.

Part of the high-voltage power supplied from the high-voltage line HVL to the main circuit converter VVVF2G1 is converted into eight kinds of three-phase AC voltage signals at the power units (PU1 and PU2) 4. Of them, three-phase AC voltage signals m1 and m2 are transmitted to the traction motors IM1 and IM2 via the connectors M1 and M2 for connecting traction motors and also via wiring, and three-phase AC voltage signals m3 and m4 are transmitted to the traction motors IM3 and IM4 via the connectors M3 and M4 for connecting traction motors and also via wiring, thereby driving the respective traction motors.

Furthermore, three-phase AC voltage signals m5 and m6 are transmitted to the traction motors IM5 and IM6 via the connectors M5 and M6 for connecting traction motors and also via wiring, and three-phase AC voltage signals m7 and m8 are transmitted to the traction motors IM7 and IM8 via the connectors M7 and M8 for connecting traction motors and also via wiring, thereby driving the respective traction motors. The configuration other than the described above is the same as that of the foregoing embodiment, so that the same reference signs are used to avoid descriptive duplication. According to the second embodiment, the motor-mounted vehicles MT1 and MT2 can be adjacently arranged to improve freedom in train formation.

The invention made by the present inventors has been specifically described based on embodiments, but the present invention is not limited to the foregoing embodiments and can be modified in various ways without departing from the gist of the invention.

The foregoing embodiments have been described in detail to make the present invention easy to understand, but the invention is not necessarily limited to include all the described configurations. Further, the configuration of each embodiment can be partly added to by another configuration, deleted, or replaced.

For example, the positions of the main circuit converters VVVF1G1 and VVVF2G1 outfitted under the floor according to the first and second embodiments may be appropriately changed on condition that the axle load balance of the vehicles is not much affected. Needless to say, connector positions and cooling fin positions may also be appropriately changed. Furthermore, although the embodiments have been described on the assumption that the traction motors are induction motors, they may be permanent magnet synchronous motors. In cases where permanent magnet synchronous motors are used, employing a configuration in which plural power units PU (for example, for four groups), each like the one used in the foregoing embodiments, are provided and in which components such as the filter capacitor and the overvoltage discharge element are provided for shared use makes it possible to enjoy maximized advantages of reducing the loss of the traction motors and the weight of the main circuit converter.

### LIST OF REFERENCE SIGNS

2 ··· Semiconductor current limiter (SHB), 3 Overvoltage prevention circuit (OVT) , 4 ··· Power units (PU, PU1, PU2), 5 ··· Filter reactors (FL, FL1, FL2), 6 ··· Filter capacitor (FC), 7 ··· Line breakers (LB, LB1, LB2), 8 ··· Main switch (MS), 9 ··· Ground switch (GS), 10 ··· Discharge switch (DS), 11 ··· Voltmeter (DCPT1), 12 ··· Discharge resistor (DCHRe), 13 ··· Pantograph, 14 ··· Main fuse (MF), 17 ··· Inverter device (INV), 20 ··· Logic units (LU, LUa, LUb), BX ··· Housing, PN ··· Connector for connecting a high-voltage line, M1 - M8 ··· Connectors for connecting traction motors, IM1 - IM8 ··· Traction motors, LU1 ···Connector for connecting a low-voltage line, HVL ··· High-voltage line, LVL ··· Low-voltage line, HBL ··· High-voltage branch line, LBL ··· Low-voltage branch line, VVVF1G1, VVVF2G1 ··· Main circuit converters

## Claims

1. A driving device for railway vehicles each provided with a high-voltage line and a low-voltage line extending in parallel along a front-rear direction,
the driving device including an automatic circuit breaker, a line breaker, a power converter, a filter reactor, a logic unit, and a housing,
wherein the housing in a state of housing the automatic circuit breaker, the line breaker, the power converter, the filter reactor, and the logic unit can be attached to and removed from a body of the railway vehicle, and
wherein a connector for connecting a high-voltage line, the connector being connectable to a high-voltage branch line branched from the high-voltage line, and a connector for connecting a low-voltage line, the connector being connectable to a low-voltage branch line branched from the low-voltage line, are provided on the high-voltage line side and on the low-voltage line side, respectively, in the housing.

2. The driving device for railway vehicles according to claim 1, wherein, in the housing, a connector for connecting a traction motor is provided, as viewed in a height direction of the vehicle body, between the connector for connecting a high-voltage line and the connector for connecting a low-voltage line, the connector for connecting a traction motor being for outputting three-phase AC power to a traction motor.

3. The driving device for railway vehicles according to claim 2, wherein the power converter outputs three-phase AC power to drive four traction motors and two each of the connectors for connecting traction motors are provided on each of two end faces in a front-rear direction of the housing.

4. The driving device for railway vehicles according to claim 2, wherein the power converter outputs three-phase AC power to drive eight traction motors, two of the connectors for connecting traction motors are provided on one end face in a front-rear direction of the housing and six are provided on the other end face.

5. A railway vehicle mounted with the driving device according to one of claims 1 to 4.

6. A method for manufacturing a railway vehicle,
wherein a housing is attached to a body of a railway vehicle, the housing housing an automatic circuit breaker, a line breaker, a power converter, a filter reactor, and a logic unit, and
wherein a high-voltage line and a low-voltage line extending in parallel along a front-rear direction of the vehicle body are connected, respectively via a high-voltage branch line and a low-voltage branch line not intersecting in a height direction of the vehicle body, to a connector for connecting a high-voltage line and to a connector for connecting a low-voltage line, respectively, the connector for connecting a high-voltage line and the connector for connecting a low-voltage line being provided on the high-voltage line side and on the low-voltage line side, respectively, in the housing.

7. The method for manufacturing a railway vehicle according to claim 6, wherein, in the housing, a connector for connecting a traction motor is placed, as viewed in the height direction of the vehicle body, between the connector for connecting a high-voltage line and the connector for connecting a low-voltage line, the connector for connecting a traction motor being for outputting three-phase AC power to a traction motor.

8. The method for manufacturing a railway vehicle according to claim 7, wherein two each of the connectors for connecting traction motors are provided on each of two end faces in a front-rear direction of the housing.

9. The method for manufacturing a railway vehicle according to claim 7, wherein two of the connectors for connecting traction motors are provided on one end face in a front-rear direction of the housing and six are provided on the other end face.
